Europäisches Patentamt

European Patent Office

Office européen des brevets

(11) Publication number: **0 126 032 B1**

# EUROPEAN PATENT SPECIFICATION

(45) Date of publication of patent specification: **11.11.92**　(51) Int. Cl.⁵: **G01S 13/528**

(21) Application number: **84830065.3**

(22) Date of filing: **12.03.84**

The file contains technical information submitted after the application was filed and not included in this specification

(54) **Device for the identification and suppression of unwanted second trace echoes in radar systems.**

(30) Priority: **04.05.83 IT 4821983**

(43) Date of publication of application:
**21.11.84 Bulletin　84/47**

(45) Publication of the grant of the patent:
**11.11.92 Bulletin　92/46**

(84) Designated Contracting States:
**DE FR GB NL SE**

(56) References cited:
**GB-A- 1 490 751
GB-A- 1 526 689
US-A- 3 706 990
US-A- 3 828 348
US-A- 3 855 593**

**INTRODUCTION TO RADAR SYSTEMS, second edition, 1983, pages 119-121, International Student Edition McGraw-Hill, Tokyo, MERILL I. SKOLNIK: "Introduction to Radar Systems"**

(73) Proprietor: **SELENIA INDUSTRIE ELETTRONICHE ASSOCIATE S.p.A.
Via Tiburtina, KM 12.400
I-00131 Roma(IT)**

(72) Inventor: **Galati, Gaspare
Via C. Corvisieri, 22
I-00162 Roma(IT)**
Inventor: **Giaccari, Ennio
Via Fogazzaro 74
Roma(IT)**

(74) Representative: **Gustorf, Gerhard, Dipl.-Ing.
Patentanwalt Dipl.-Ing. Gerhard Gustorf
Bachstrasse 6 A
W-8300 Landshut(DE)**

EP 0 126 032 B1

## Description

This invention relates to a device for the identification and suppression of unwanted second-time-around echoes for radar systems.

The device is concerned with the radar field or more particularly with the field of surveillance radars which furnish a non- ambiguous indication of distance, as in the case with the majority of medium and high power radars, and are provided with a transmitter with power oscillator (Skolnik: Introduction to Radar Systems. M$^c$ Graw Hill N.Y. 2$^{nd}$ Edition 1980).

As it is known, the cancellation of the 1$^{st}$ time around clutter is made possible in this equipment by the locking of the reference local oscillator, commonly known as COHO (coherent oscillator), with the phase of the transmitted pulse.

In this way it is possible to guarantee a satisfactory performance of the canceller, commonly called MTI (Moving Target Indicator ) canceller. To prevent the suppressing of targets falling in the so-called "blind velocities" ("blind velocities" being the velocities at which the MTI cancellor eliminates the signals of useful targets SKOLNIK 2$^{nd}$ Edition as quoted above) it is necessary to vary the repetition rate from pulse to pulse or from group of pulses to group of pulses. This is commonly referred to as PRF STAGGERING (SKOLNIK 2$^{nd}$ Edition as quoted above). In the preceding technique, the cancellation of the echoes of the second time around is performed by a coherent transceiver which renders the MTI filter efficient (Skolnik as above) even with these echoes. The transmitting section of the coherent transceiver is based on a power amplifier tube, which is a klystron in the civil applications to which reference is chiefly made here.

In the systems with a transmitter having a power oscillator tube (normally this is a magnetron) the coherence obtained by means of the locking of the coherent oscillator (COHO) remains only during the radar sweep. Further, the preceding technique involves a suitable variation of the radar repetition rate from pulse to pulse and a recognition of the pattern of the clutter of the 2$^{nd}$ time around. The sequence of echoes of point clutter of the 2$^{nd}$ time around under conditions of variation of the repetition rate (PRF-Staggering) is commonly known as the pattern. This technique has, however, one substantial limitation: it does not take into account the correlation of amplitude and is not suitable for the processing of groups of pulses. In practice, in the preceding technique only the use of a klystron transmitter provides an efficient cancellation of the 2$^{nd}$ time around echoes since the klystron transmitter allows the coherence to be mainatined even for 2$^{nd}$ t.a. clutter echoes which are then cancelled by the MTI. But the use of the klystron transmitter results in the following disad vantage.

a) much higher levels of high voltage and consequent risk of harmful radiation;

b) liquid cooling, especially in the high power systems, and consequent technological problems of maintainability;

c) notable increases in size, weight and cost.

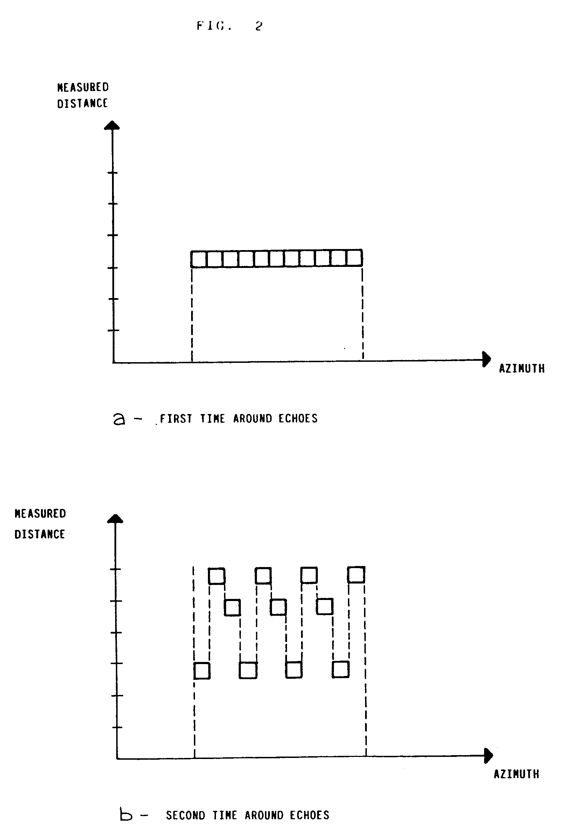

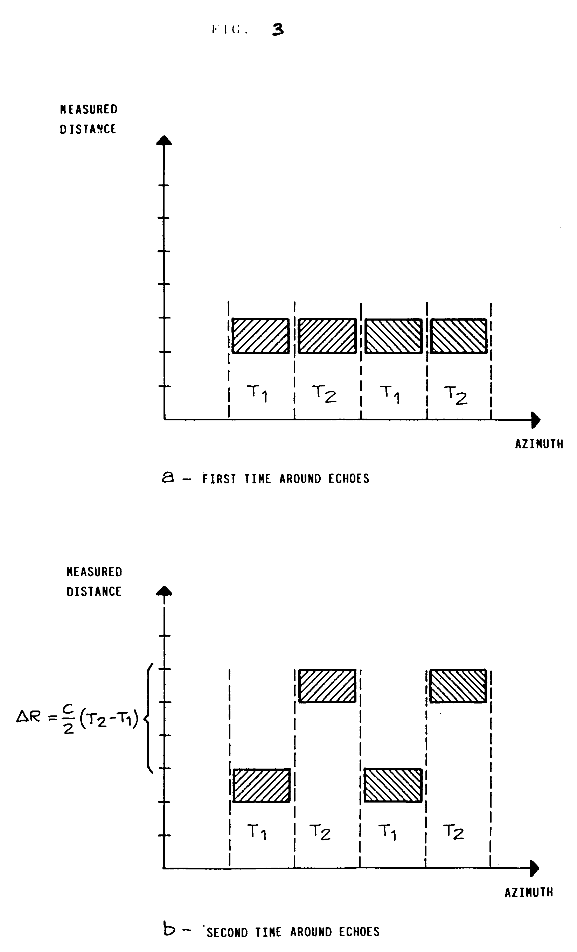

The subject of the present invention is therefore a device suitable for the identification and subsequent cancellation of unwanted 2$^{nd}$ t.a. echoes in radar systems by means of correlations in range bins of a known delay (Skolnik 2$^{nd}$ Edition as above). This device is applicable to surveillance radars which furnish a non-ambiguous indication of distance (as is the case for the majority of medium and high power radars) and are provided with a power oscillator transmitter such as the magnetron. The principle of operation of the device forming the object of the present invention is based on the recognition of a pair of groups of second t.a. pulses (see Figs. 2 and 3) which are seen by the radar as two groups adjoining in azimuth and separated by a distance equal to

$$R = \frac{C}{2}(T_2 - T_1)$$

where C is the velocity of light and T$_1$, T$_2$ are the repetition periods of each group.

Normally the groups of pulses are arranged such as to occupy an azimuthal extension equal to half the width of the antenna beam; consequently a target is detected in two groups of pulses.

Under these conditions, if a 2$^{nd}$ t.a. echo is present in the considered distance interval, the two above-described groups are "statistically dependent" in so far as they are originated by the same reflecting surface (terrain, rain, aeromobilities).

By statistically dependent we mean that there is a correlation between the two group as a result of which, if the signal of one of the two groups is strong it is highly probable that the signal of the other groups is also strong. The analysis of the correlation between the groups is the key for the recognition and elimination of anomalous echoes by suppressing the radar video in the relative group.

The principle of operation of the proposed invention is the test of two hypoteses, for each range bin:

H$_o$ -  The group under examination does not contain 2$^{nd}$ t.a. echoes but only noise and possible 1$^{st}$ t.a. echoes.

H$_1$ -  The group under examination contains 2$^{nd}$ t.a. echoes.

Arranging the physical phenomenon three limit cases can be identified:

a) Only noise :

- correlation within the group = 0
- correlation between the two groups = 0

b) 1$^{st}$ t.a. clutter :
- correlation within the groups = 1
- correlation between the two groups = 0

c) 2$^{nd}$ t.a. clutter :
- correlation within the group $\simeq$ 1
- correlation between the two groups $\simeq$ 1

The test of the hypoteses can be made in two successive stages :

1. Discrimination between the situation of noise only (a) and that of clutter (b) or (c).

2. Discrimination between 1$^{st}$ t.a. clutter (b) and 2$^{nd}$ t.a. clutter (c).

Thus the device which is the subject of this invention performs a comparison between the amplitudes of signal relative to the two groups in question. Whenever the comparison indicates that the percentage difference of this amplitude is less than a certain threshold, the groups are identified as correlated due to the presence of 2$^{nd}$ t.a. signals and the whole operation of comparison is repeated for further antenna rotations in order to make the identification more accurate.

The figures attached are listed below:

Fig. 1     Block diagram of the device for the identification and suppression of unwanted 2$^{nd}$ t.a. echoes.

Fig. 2     Distance-azimuth relationship for 1$^{st}$ t.a. (a) and 2$^{nd}$ t.a. echoes for conventional processing (not in groups of pulses) with triple variation of the radar repetition rate (tripple staggering of PRF).

Fig. 3     Distance azimuth relationship for 1$^{st}$ trace (a) and 2$^{nd}$ trace (b) echoes for group-of-pulses processing.

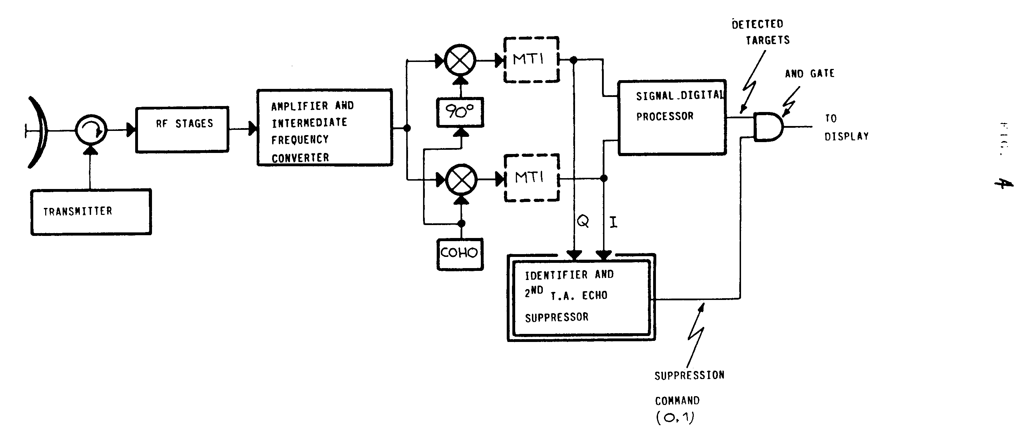

Fig. 4     Insertion of the device, subject of this invention (identifier and suppressor of 2$^{nd}$ t.a. echoes) in a radar system.

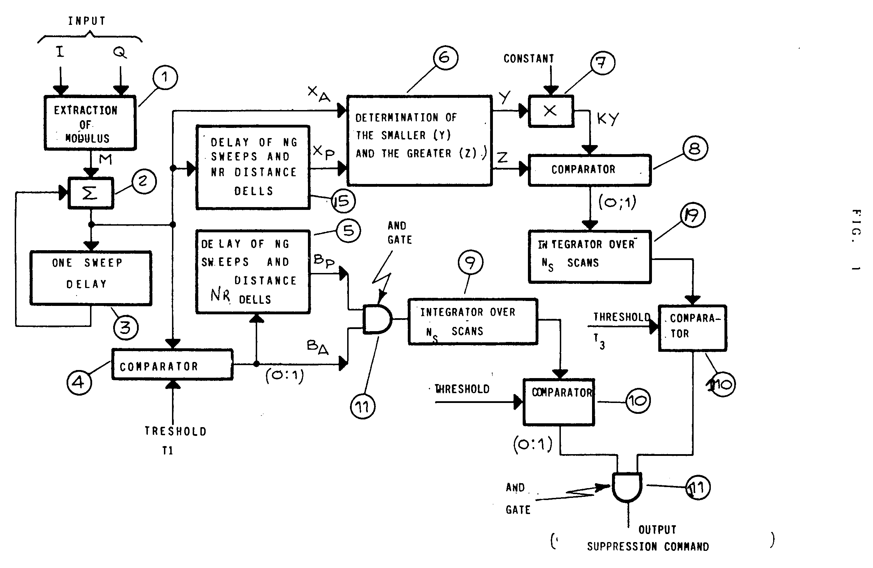

This description is written in relation to the forms of realization at present preferred by way of illustration, but which are not in any way limitative and with reference to the attached figures containing drawings in which: that of fig. 1 shows the block diagram of the invention. The first operation performed on the complex signal coming from the coherent detector is the extraction of the modulus defined as $M = \sqrt{I^2 + Q^2}$ (1).

This is followed by the integration of $N_G$ pulses realized with a summer (2) and a delay element (3).

By means of a comparator (4) with a threshold $T_1$ of adjustable amplitude a discrimination is made between noise and a radar echo. In what follows $N_G$ represents the number of pulses in the groups; $N_R$ represents the number of range cells (elementary intervals of distance); X, the amplitude of the signal after the integration of the group; B, the enabling signal with the subscript A which indicates "actual" and the subscript P which indicates preceding. A delay equal to $N_G$ sweeps and $N_R$ elementary intervals of distance (range bins) (5, 15) makes available the signals $X_A$, $X_p$, $B_A$, and $B_p$. The last two, $B_A$ and $B_p$, are fed to a coincidence circuit (11) or an AND gate the output of which, integrated over a number of scans (9) and compared (10) with a threshold $T_2$, furnishes the indication of presence of unwanted echoes (clutter). The first two, i.e. $X_A$ and $X_p$ are fed to an organ which identifies the smaller of them (6) and this is subsequently multiplied (block 7) by a constant K (which is adjustable and allows the probability of a false alarm and detection to be regulated) and subsequently compared (8) with the larger.

The result of the comparison is fed to an integrator (19) which operates on a prefixed number of successive scans and then to a comparator (110) and an AND gate (111). The signal at the output of this AND gate is used to suppress the groups in which a 2$^{nd}$ t.a. echo has been detected.

If there is a variation of the repetition rate from pulse to pulse (pure stagger) it is necessary to vary the delay of blocks (3) and (5) proportionally to the periods of stagger.

The subject device utilizes digital techniques which permit an easy reliable and compact construction of the delay elements and logic. In the preferred version it is constituted by three printed circuits each one containing in the order of fifty micrologic elements. With respect to the preceding technique, the device has the advantage of allowing the cancellation of unwanted 2$^{nd}$ t.a. elements without any need for the use of a klystron transmitter, which as already stated, presents disadvantages as compared with the simpler magnetron transmitter.

The invention can be used in radars with power oscillator tansmitters and with pulses group processing, for instance that described in the work of E. Cristofalo, G. Galati, "Angular accuracy of an FFT-based radar processor" SELENIA Technical Review, Vol. 7, No. 1, 1980.

**Claims**

1. Device for suppressing second-time-around unwanted echoes in a pulse radar having a transmitting section with a power oscillator transmitting pulses with two different predetermined repetition frequencies in alternate groups defining alternate scanning intervals, said scanning intervals being all of the same length and corresponding to half the width of the antenna beam, the number of pulses (Ng) transmitted during each alternate group being related to the repetition frequency in said group, and a coherent receiving section with means for cancelling first-time-around clutter echoes, said device comprising a modulus extractor (1) arranged to receive the complex output signals from the receiving section and characterized in that it includes:

- summing means (2,3) connected to the output of the modulus extractor (1) for accumulating the modulus of echoes received in Ng consecutive range sweeps in response to the pulses of a given group, said summing means comprising a summer (2) and a delay element (3) having a delay equal to the pulse repetition frequency in said given group,
- a first threshold comparison means (4) connected to the output of said summing means (2,3) for generating a first binary signal indicative of the presence of noise only,
- a first delay means (5) coupled to said first comparison means (4) for retarding the output signal of said comparison means by a time equal to the scanning interval of said given group,
- a first coincidence circuit (11) with inputs respectively connected to said first comparison means (4) and to said first delay means (5) for generating an enabling signal upon simultaneous presence of signals on the inputs of said coincidence circuit,
- first integrating means (9) connected to said first coincidence means for adding up enabling signals occurring in a number Ns of successive scanning intervals,
- a second threshold comparison means (10) coupled to said first integrating means (9),
- a second delay means (15) coupled to said summing means (2,3) for retarding the output signal of said summing means by a time equal to the scanning interval of said given group,
- evaluating means (6) receiving the output signals of the summing means (2,3) and said second delay means (15) for identifying the smaller of these two signals on a "select smaller" output,
- a multiplier (7) for multiplying the signal present on said "select smaller" output by a constant,
- a third threshold comparison means (8) coupled to said multiplier and to the evaluation means (6) for receiving the greater of the signals present at the inputs of said evaluating means, said third threshold comparison means generating a second binary signal,
- second integrating means (19) connected to said third threshold comparison means (8) for adding up the second binary signal signals occurring in a number Ns of successive scanning intervals,
- a fourth threshold comparison means (110) coupled to said second integrating means (19), and
- a second coincidence means (11) receiving the output signals from said second and fourth threshold comparison means (10,110) for generating a suppression signal of the groups where second-time-around echoes are present upon coincidence of said output signals.

2. A pulse radar comprising a transmitting section with a power oscillator transmitting pulses with two different predetermined repetition frequencies in alternate groups defining alternate scanning intervals, said scanning intervals being all of the same length and corresponding to half the width of the antenna beam, the number of pulses (Ng) transmitted during each alternate group being related to the repetition frequency in said group, a coherent receiving section and processing means for cancelling first-time-around clutter echoes, said radar characterized in that it further comprises a device according to Claim 1 connected at the output of the receiving section in parallel with the processing means and a third coincidence means controlled by the second coincidence means (11) for blocking the output of said processing means and suppressing unwanted second-time-around echoes.

**Patentansprüche**

1. Vorrichtung zum Unterdrücken unerwünschter Sekundärechos in einem Impulsradar, dessen Senderbereich einen Leistungsoszillator hat, der Impulse mit unterschiedlichen, vorbestimmten Repetitionsfrequenzen in alternierenden Gruppen aussendet, die alternierenden Abtastintervallen entsprechen, welche alle dieselbe Länge haben und der halben Bandbreite des Antennenstrahls entsprechen, wobei die Anzahl (Ng) der im Verlauf jeder der alternierenden Gruppen ausgesendeten Impulse mit der Repetitionsfrequenz verbunden ist, und dessen kohärenter Empfangsbereich Mittel zum Eliminieren primärer Clutter-Auslenkechos hat, wobei die Vorrichtung einen Modulusextraktor (1) aufweist, der so angeordnet ist, daß er von dem Empfangsbereich die komplexen Ausgangssignale erhält, gekennzeichnet durch

- eine Addiereinrichtung (2,3), die mit dem Ausgang des Modulusextraktors (1) verbunden ist und die Echomoduli kumuliert, welche in Ng aufeinanderfolgenden Entfernungsdurchläufen empfangen worden sind als Antwort auf die Impulse einer bestimmten Gruppe, wobei die Addiereinrichtung ein Addierglied (2) und ein Verzögerungselement (3) mit einer Verzögerung aufweist, die gleich der Impulsrepetitionsfrequenz in dieser Gruppe ist,
- eine erste Schwellwertvergleichsschaltung (4), die mit dem Ausgang der Addiereinrichtung (2,3) verbunden ist und ein erstes Binärsignal erzeugt, das die Anwesenheit von nur Geräusch anzeigt,
- eine erste Verzögerungsschaltung (5), die mit der ersten Vergleichsschaltung (4) verbunden ist und deren Ausgangssignal mit einer Zeit verzögert, die gleich dem Abtastintervall der entsprechenden Gruppe ist,
- eine erste Koinzidenzschaltung (11), deren Eingänge mit der ersten Vergleichsschaltung (4) bzw. mit der ersten Verzögerungsschaltung (5) verbunden sind und die bei gleichzeitiger Anwesenheit von Signalen an den Eingängen der Koinzidenzschaltung ein Freigabesignal erzeugt,
- ein erstes Integrierglied (9), das mit der ersten Koinzidenzschaltung verbunden ist und Freigabesignale addiert, die in einer Anzahl Ns von aufeinanderfolgenden Abtastintervallen vorkommen,
- eine zweite Schwellwertvergleichsschaltung (10), die mit dem ersten Integrationsglied (9) verbunden ist,
- eine zweite Verzögerungsschaltung (15), die mit der Addiereinrichtung (2,3) verbunden ist und deren Ausgangssignale mit einer Zeit verzögert, die gleich dem Abtastintervall der entsprechenden Gruppe ist,
- eine Auswerteschaltung (6), die die Ausgangssignale der Addiereinrichtung (2,3) und der zweiten Verzögerungsschaltung (15) empfängt und das kleinere der beiden Signale in einem Ausgang für "Selektion klein" bereithält,
- eine Multiplizierschaltung (7) zum Multiplizieren des am Ausgang "Selektion klein" vorliegenden Signals mit einer Konstanten,
- eine dritte Schwellwertvergleichsschaltung (8), die mit der Multiplizierschaltung und mit der Auswertschaltung (6) verbunden ist und das größere der an den Eingängen der Auswertschaltung vorliegenden Signale empfängt und ein zweites Binärsignal erzeugt,
- ein zweites Integrierglied (19), das mit der dritten Schwellwertvergleichsschaltung(8) verbunden ist und die zweiten Binärsignale addiert, die in einer Anzahl Ns aufeinanderfolgender Abtastintervalle vorkommen,
- eine dritte Schwellwertvergleichsschaltung (110), die mit dem zweiten Integrierglied (19) verbunden ist, und
- eine zweite Koinzidenzschaltung (11), die die Ausgangssignale der zweiten und der vierten Schwellwertvergleichsschaltung (10,110) empfängt und ein Unterdrückungssignal der Gruppen erzeugt, in denen bei Koinzidenz der Ausgangssignale Sekundärechos auftreten.

2. Impulsradar mit einem Senderbereich, der einen Leistungsoszillator hat, der Impulse mit unterschiedlichen, vorbestimmten Repetitionsfrequenzen in alternierenden Gruppen aussendet, die alternierenden Abtastintervallen entsprechen und die dieselbe Anzahl (Ng) von Impulsen haben, mit einem kohörenten Empfangsbereich und mit einem Prozessor zum Ausschalten primärer Clutter-Auslenkechos, dadurch gekennzeichnet, daß der Impulsradar ferner eine Vorrichtung nach Anspruch 1 enthält, die am Ausgang des Empfangsbereichs in Parallelschaltung mit dem Prozessor und einer dritten Koinzidenzschaltung verbunden ist, die von der zweiten Koinzidenzschaltung (11) gesteuert wird, um dadurch den Ausgang des Prozessors zu blockieren und unerwünschte Sekundärechos zu unterdrücken.

**Revendications**

1. Dispositif pour la suppression des échos secondaires indésirables dans un radar à impulsions comportant une section d'emission avec un oscillateur de puissance apte à émettre deux fréquences differentes pédéterminées à répétition dans des groupes alternants correspondant à des intervalles d'exploration alternants, lesdits intervalls étant de la même largueur et correspondant à la moritié de la largeur d'un faisceau d'antenne, le nombre (Ng) des impulsions émises dans chacunr des groupes alternants étant en corrélation avec la fréquence de répétition dudit groupe, et comportant une section de réception cohérente avec des moyens d'annulation des échos primaires parasites, ledit dispositif comportant un extracteur de module (1) prévu pour recevoir les signaux complexes de sortie venant de la section de réception, caractérisé par:

- un système de totalisation (2,3) relié à la sortie de l'extracteur de module (1) pour accumuler les modules des échos reçus, durant Ng cycles des différentes distances explorées, comme réponses aux impulsions d'un groupe déterminé, ledit système de totalisation comprenant un additionneur (2) et un élément de retard (3) dont le délai est égal à la fréquence de répétition des impulsions dans ledit groupe,
- un premier circuit de comparaison des seuils (4) relié à la sortie du systeme de totalisation (2,3) apte à produire un premier signal binaire indiquant la fréquence d'un seul bruit,
- un premier circuit de retard (5) relié au premier circuit de comparaison (4) apte à retarder le signal de sortie dudit circuit de comparaison d'un temps égal à l'intervalle d'exploration dudit groupe,
- un premier circuit de coincidence (11) dont les entrées sont reliées au premier circuit de comparaison (4) et au premier circuit de retard (5), apte à produire un signal de validation lorsque des signaux simultanés apparaissent aux entrées dudit circuit de coincidence,
- un premier circuit d'intégration (9) relié au premier circuit de coincidence apte à cumuler des signaux de validation présents dans un nombre Ns des intervalles successifs d'exploration,
- un second circuit de comparaison des seuils (10) relié au premier circuit d'intégration (9),
- un second circuit de retard (15) relié au système de totalisation (2,3) apte à retarder les signaux de sortie dudit système de totalisation d'un temps égal à l'intervalle d'exploration dudit groupe,
- un circuit d'évaluation (6) apte à recevoir les signaux de sortie dudit système de totalisation (2,3) et dudit second circuit de retard (15), pour identifier le plus petit des deux signaux a une sortie "sélection petit",
- un circuit de multiplication (7) apte à multiplier le signal présent à la sortie "sélection petit" par une costante,
- un troisième circuit de comparaison des seuils (8) relié au circuit de multiplication et au circuit d'évaluation (6) pour recevoir le plus grand des signaux présents aux entrées du circuit d'évaluation, ledit troisième circuit de comparaison des seuils produisant un second signal binaire,

- un second circuit d'intégration (19) relié au troisième circuit de comparaison des seuils (8) apte à cumuler les seconds signaux binaires présents dans un nombre Ns d'intervalles successifs d'exploration,
- un quatrième circuit de comparaison des seuils (110) relié au second circuit d'integration (19), et
- un second circuit de coincidence (11) apte à recevoir les signaux de sortie venant du second et du quatrième circuit de comparaison des seuils (10, 110) pour produire un signal de suppression des groupes dans lesquels sont présents des échos secondaires lorsque lesdits signaux de sortie coincident.

2. Un radar à impulsions comportant une section d'émission avec un oscillateur de puissance émettant des impulsions avec deux fréquences differentes pédéterminées à répétition dans des groupes alternants correspondant à des intervalles d'exploration alternants, alternants, lesdits groupes ayant le même nombre d'impulsions (Ng), une section de réception cohérente et un processeur apte à éliminer les échos pimaires parasites, caractérisé en ce qu'il comprend un dispositif selon la revendication 1 relié à la sortie de la section de réception en parallèle avec le processeur, et un troisième circuit de coincidence controlé par le second circuit de coincidence (11) pour le blocage de la sortie du processeur et pour l'élimination des échos secondaires indésirables.

FIG. 1

FIG. 2

MEASURED
DISTANCE

AZIMUTH

a - FIRST TIME AROUND ECHOES

MEASURED
DISTANCE

AZIMUTH

b - SECOND TIME AROUND ECHOES

FIG. 3

MEASURED
DISTANCE

AZIMUTH

a − FIRST TIME AROUND ECHOES

MEASURED
DISTANCE

$$\Delta R = \frac{c}{2}\left(T_2 - T_1\right)$$

AZIMUTH

b − SECOND TIME AROUND ECHOES

9

FIG. 4